# EUROPÄISCHE PATENTSCHRIFT

(11) **EP 1 368 153 B1**
(45) Veröffentlichungstag und Bekanntmachung des Hinweises auf die Patenterteilung: **29.08.2007**
(21) Anmeldenummer: 02709960.5
(22) Anmeldetag: 13.02.2002
(51) Int. Cl.: B23K 26/28, B23K 11/11, B23K 15/00

(54) **VERFAHREN ZUM FÜGEN EINER NOCKENWELLE**
METHOD FOR ASSEMBLING A CAMSHAFT
PROCEDE D'ASSEMBLAGE D'UN ARBRE A CAMES

(30) Priorität: 12.03.2001 CH 4572001
(43) Veröffentlichungstag der Anmeldung: 10.12.2003
(73) Patentinhaber: Merz, Karl, CH-5734 Reinach/AG (CH)
(72) Erfinder: Merz, Karl, CH-5734 Reinach/AG (CH)
(74) Vertreter: Ottow, Jens M.
(86) Internationale Anmeldenummer: PCT/CH2002/000084
(87) Internationale Veröffentlichungsnummer: WO 2002/072306

(56) Entgegenhaltungen:
- US-A- 4 508 495
- US-A- 4 597 365
- US-A- 4 616 389

## Beschreibung

### TECHNISCHES GEBIET

Die vorliegende Erfindung betrifft ein Verfahren zum Fügen einer Nockenwelle unter Verwendung einer Welle und von mehreren, jeweils eine Durchgangsöffnung für die Welle aufweisenden Nocken.

### STAND DER TECHNIK

Ein Verfahren dieser Art ist aus der US 4,983,797 bekannt, wobei dort die Welle fest eingespannt wird und die Nocken einzeln nacheinander mittels eines ersten Robotors aus einem Magazin entnommen, auf die Welle aufgeschoben und auf der Welle in der jeweils richtigen Längsposition und Drehstellung festgehalten werden. Mittels eines am Arm eines zweiten Roboters befestigten Laserschweisskopf werden die so plazierten und festgehaltenen Nocken dann mit der Welle verschweisst.

### DARSTELLUNG DER ERFINDUNG

Durch die Erfindung, wie sich in den Patentansprüchen gekennzeichnet ist, wird eine andere Fügemethode vorgeschlagen. Diese ist dadurch gekennzeichnet, dass die Nocken in einem Magazin dicht gepackt, bezüglich ihrer Durchgangsöffnung für die Welle koaxial sowie in einer bestimmten Drehstellung relativ zueinander ausgerichtet werden, dass die Welle in das Nockenpaket eingeführt und darin durch Verschieben in ihrer Längsrichtung nacheinander relativ zu einzelnen Nocken ausgerichtet wird und dass die Nocken dabei nacheinander auf der Welle fixiert werden.

Gegenüber dem Stand der Technik weist das erfindungsgemässe Verfahren u.a. den Vorteil auf, dass es mit wesentlich einfacheren mechanischen Mitteln sehr präzise ausführbar ist. Ein um mehrer Achsen beweglicher Montageroboter ist nicht vonnöten.

Um die Nocken in ihre richtige Drehstellung bringen, wird bevorzugt einfach, soweit erforderlich, die Welle vor dem Fixieren der jeweiligen Nocke um einen bestimmten Winkelbetrag gedreht.

Die Drehstellung der Nocken ist am einfachsten dann zu kontrollieren, wenn die Nocken im Magazin relativ zueinander alle in derselben Drehstellung enthalten sind. Das Magazin wird dann auch von seiner Ausbildung und Befüllung her besonders einfach.

Gemäss einer weiteren bevorzugten Ausführungsform der Erfindung wird das Fixieren der Nocken auf der Welle lediglich als Vorfixieren ausgeführt und die Nocken erst später, weiter bevorzugt sogar in einer anderen Bearbeitungsstation, definitiv mit der Welle zu verbunden.

Das Vorfixieren kann einfach durch eine Eigenvorspannung der Teile, durch Verkrimpen, klebetechnisch oder schweisstechnisch, im lezteren Fall insbesondere durch Punktschweissen, erfolgen.

Gemäss einer anderen bevorzugten Ausführungsform der Erfindung werden die Nocken nach dem Vorfixieren schweisstechnisch, insbesondere laser- oder elektronenstrahltechnisch mit der Welle definitiv verbunden.

Um die Belastungen der Teile während des Schweissens zu verringern und ein Verbiegen der Welle zu vermeiden, können Welle und Nocken vor dem Verschweissen der Nocken mit der Welle vorgewärmt werden. Gemäss einer weiteren besonders bevorzugten Ausführungsform der Erfindung wird die Erwärmung durch elektrische Verlustleistung herbeigeführt und dazu ein elektrischer Strom über die Welle geleitet.

Werden als Nocken solche aus einem wenigstens bereichsweise bis zu einer ersten Härte gehärteten Stahl verwendet, kann die Erwärmung so ausgeführt werden, dass die Nocken zu einer geringeren als der ersten Härte vergütet werden. Sie sind dann auch einfacher schweissbar.

Wie bereits angesprochen, kann das Vorfixieren der Nocken auf der Welle einerseits und ein definitves Verschweissen der Nocken mit der Welle andererseits sowie ggf. auch ein Erwärmen der mit den vorfixierten Nocken versehenen Welle vor dem Schweissen jeweils in getrennten Bearbeitungsstationen ausgeführt werden, so dass diese Vorgänge in rationeller Weise an verschiedenen Nockenwellen gleichzeitig ablaufen können.

Weitere Ausgestaltungen und Merkmale der Erfindung ergeben sich aus der nachfolgenden Beschreibung von Ausführungsbeispielen.

### KURZE ERLÄUTERUNG DER FIGUREN

Es zeigen:
- Fig. 1: In einem Längsschnitt ein Magazin mit einer Mehrzahl von Nocken,
- Fig. 2: das Magazin von Fig. 1 mit einer darin und durch das Nockenpaket durchgesteckten Welle;
- Fig. 3: eine einzelne Nocke auf der Welle in einer Stirnansicht,
- Fig. 4a: unter a) in vergrösserter Darstellung sowie wiederum in einem Längsschnitt eine einzelne, laserschweisstechnisch definitiv durch Verkrimpen auf der Welle vorfixierte Nocke;
- Fig. 4b): in gleicher Darstellung eine einzelne, durch Verkrimpen auf der Welle vorfixierte Nocke;
- Fig. 5: eine Welle mit mehreren auf ihr fixierten Nocken, welche zum Zwecke ihrer Vorwärmung endseitig jeweils an die Pole einer Stromquelle angeschlossen ist; und
- Fig. 6: schematisch den Ablauf eines Fügeverfahrens mit den Schritten: (i) Vorfixieren der Nocken auf der Welle, (ii) Vorwärmen der Welle und der Nocken und (iii) definitives Verschweissen der Nocken mit der Welle.

### WEGE ZUR AUSFÜHRUNG DER ERFINDUNG

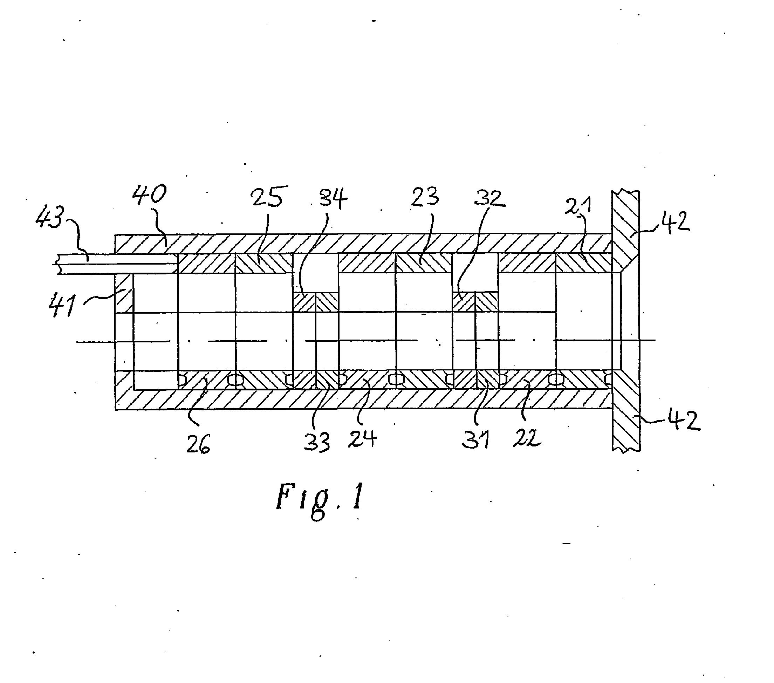

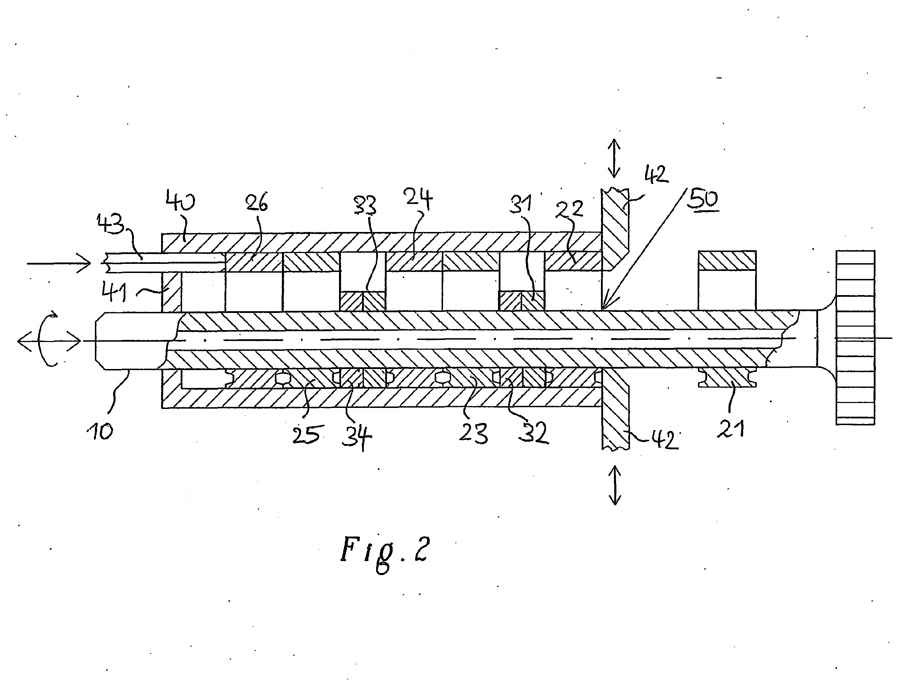

In Fig. 1 ist mit 40 ein mit sechs Nocken 21 - 26 und mit vier Lagerringen 31-34 beladenes Magazin bezeichnet. Die Nocken 22 - 26 und die Lagerringe 31-34 sind im Magazin 40 dichtgepackt sowie koaxial zueinander ausgerichtet. Die Nocken befinden sich im Magazin 40 bevorzugt desweiteren alle in der gleichen, durch die Form des Magazins 40 festgelegten Drehstellung relativ zueinander. Das Magazin 40 weist eine hintere Stirnwandung 41 mit einer Durchstecköffnung für eine Welle 10 (siehe Fig. 2) auf. Auf seiner rechten Stirnseite sind verstellbare Verschlussmittel 42 vorhanden, damit es von dieser Seite aus mit den Nocken 20 und den Lagerringen 30 befüllt werden kann. Von einem Schubdorn 43 werden die Nocken und Lagerringe nach rechts gedrückt und an den Verschlussmitteln 42 in definiertem Anschlag gehalten. Die Verschlussmittel 42 sowie der Schubdorn 43 müssen nicht notwendig Teil des Magazins sein.

In Fig. 2 ist eine Welle 10 in das Magazin 40 ein- und durch das Paket aus den Nocken 21 - 26 und Lagerringen 31 - 34 hindurchgesteckt. Es soll hier angenommen werden, dass das Magazin durch entsprechende Haltemittel ortsfest gehalten ist und die Welle beispielweise in einer Art Spindel aufgenommen und mittels dieser in ihrer Längsrichtung verschiebbar sowie um ihre Längsachse drehbar ist. Die entsprechenden Haltemittel sind in der Zeichnung nicht dargestellt. Durch den Pfeil 50 sind Mittel ebenfalls nur angedeutet, mit denen die Nocken 21 - 26 sowie ggf. auch die Lagerringe 31 - 34 auf der Welle fixiert oder zumindest vorfixiert werden können. Bei diesen Mitteln 50 kann es sich z.B. um einen Laser handeln, mit dem eine insbesondere punktuelle Verschweissung der Nocken mit der Welle möglich ist.

Mit der beschriebenen Vorrichtung können die Nocken 21 - 26 (die Lagerringe 31 - 36 sollen im weiteren nicht weiter berücksichtig werden) ausgehend von der Nocke 21 schrittweise nacheinander in der Reihenfolge, wie sie im Magazin enthalten sind, auf der Welle 10 fixiert werden, wobei die Fixierung jeweils bezüglich derjenigen Nocke erfolgt, welche sich ganz rechts im Magazin 40 im Anschlag an den Verschlussmitteln 42 befindet. Bezüglich dieser Nocke wird die richtige Position und Drehstellung der Welle 10 jeweils durch Längsverschieben und ggf. Drehen der Welle eingestellt.

Nach jeder einzelnen Fixierung werden die Verschlussmittel 42 kurzzeitig geöffnet, damit ein Längsabschnitt der Welle zusammen mit der darauf fixierten Nocke aus dem Magazin herausgezogen werden kann. Die im Magazin folgende Nocke wird fixiert, sobald sie ihrerseits durch den Schubdorn 43 bis an die Verschlussmittel vorgeschoben worden ist und die Welle durch Längsverschieben und ggf. Drehen einjustiert ist.

Fig. 2 zeigt die Welle 10 mit einer bereits auf ihr fixierten und aus dem Magazin 40 herausgezogenen Nocke 21 in dem Moment, in dem die Nocke 22 mit den Mitteln 50 fixiert wird. Sobald alle in dem Magazin enthalten Teile verbraucht sind, kann die Welle ganz aus dem Magazin herausgezogen werden.

Sofern es sich bei der Fixierung, was bevorzugt ist, lediglich um eine Vorfixierung handelt, müssen die Nocken noch definitiv mit der Welle verbunden werden. Die erfolgt gemäs einer Weiterbildung der Erfindung in einem separaten Prozess z.B durch Laserschweissen. In diesem Falle ist es von Vorteil, die Nocken mit einer stirnseitig angeordneten Nut unter Ausbildung einer Art Fussleiste zu versehen, durch welche hindurch mit dem Laser unter einem schrägen Winkel eine dauerhafte Verschweissung mit einem praktisch optimalen Schweissquerschnitt möglich ist.

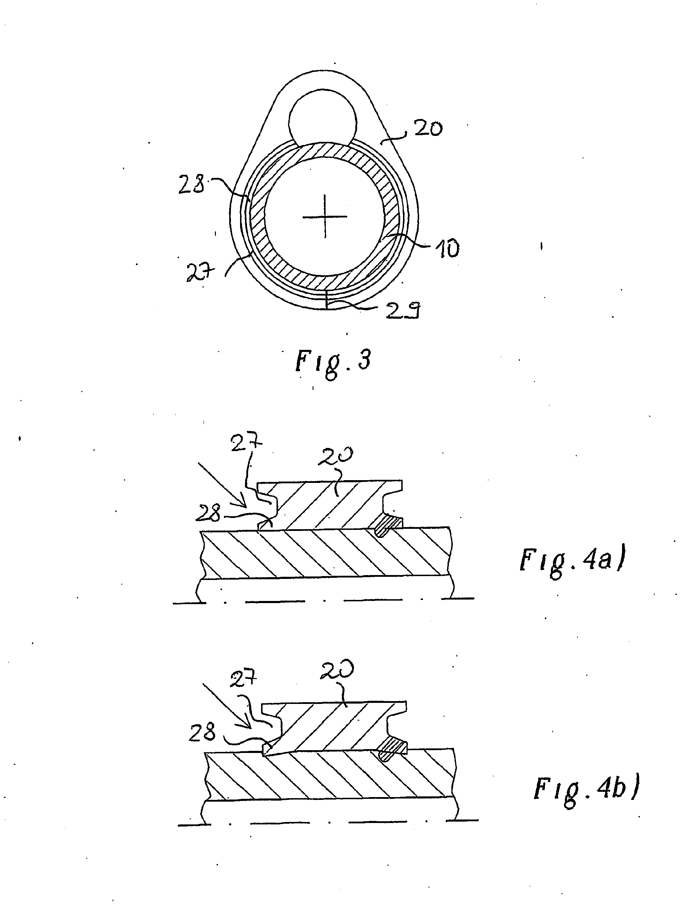

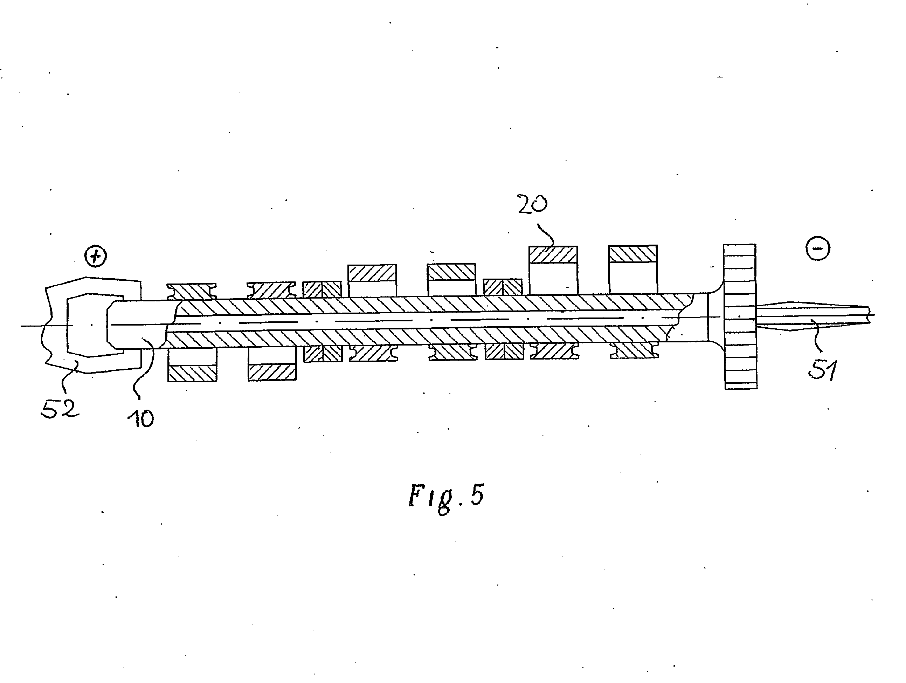

Eine Stirnansicht einer mit einer solchen Nut 27 versehenen Nocke 20 auf einer angeschnittenen Welle 10 zeigt Fig. 3. Fig. 4a) zeigt in einem Längsschnitt eine Ausschnittsvergrösserung dieser Nocke 20, wobei im linken Teil der Figur die Nut 27 sowie die sich dadurch ergebende Fussleiste 28 besonders gut zu erkennen sind. Im rechten Teil der Figur ist der sich ergebende Schweissquerschnitt dargestellt.

Bei der Verwendung derartiger Nocken kann die Vorfixierung anstatt durch das erwähnte Punktschweissen auch durch Verkrimpen erfolgen, wie dies (stark übertrieben) in Fig. 4b) dargestellt ist. Hierbei wird unter Einsatz eines geeigneten Werkzeuges die Fussleiste 28 unter Druckausübung etwas in die Oberfläche der Welle 10 eingedrückt und dadurch zwischen der Nocke 20 und der Welle 10 ein gewisser Formschluss erzeugt. Diese Art der Vorfixierung hat auch den Vorteil, dass ein allfällig zwischen der Nocke und der Welle vorhandenes, für die Schweissung nachteiliges Spiel, elimiinert wird. Der Schweissquerschnitt ist auch in Fig. 4b) im rechten Teil wieder dargestellt.

Als weitere mögliche Art der Vorfixierung kann generell auch die Klebetechnik erwähnt werden. Ein kleiner Klebepunkt am Nockenumfang kann dabei bereits ausreichend sein. Ggf. kann die Eigenvorspannung der Teile unter Ausbildung eines Pressitzes für eine genügende Vorfixierung bereits ausreichend sein.

In Bezug auf die Nocke 20 von Fig. 3 soll noch erwähnt werden, dass diese aus einem zusammengebogenen, bei 29 insbesondere durch Widerstandsschweissen zusammengeschweisten Blechstreifen hergestellt sein kann. Durch spezielle Strukturierung der Innenseite des Streifens kann erreicht werden, dass die Nocke die 20 die Welle über einen grösseren Winkelbereich eng umschliesst, wie dies in Fig. 3 auch dargestellt ist.

Gewöhnlich werden für die Herstellung von Nockenwellen der hier betrachteten Art vergleichsweise harte, hochaufgekohlte Stähle eingesetzt. Derartige Stähle sind nicht gut zu schweissen. In dieser Hinsicht ist es von Vorteil, die miteinander zu verschweissenden Teile vorzuwärmen. Gemäss einer weiteren Ausführungsform der Erfindung kann ein Vorwärmen der mit den vorfixierten Nocken versehenen Welle in einfacher Weise dadurch erfolgen, dass Strom durch die Welle geleitet wird. Die Erwärmung erfolgt hierbei durch die ohm'schen Verluste des Stromes. Es hat sich gezeigt, dass bei einer Spannung kleiner als 20 V, insbesondere von sogar nur 5 V, und einem Strom im Bereich zwischen 5 und 12 kA eine sekundenschnelle, sehr gleichmässige Erwärmung der Welle und der Nocken erreichbar ist.

Fig. 5 zeigt eine Welle 10 mit darauf vorfixierten Nocken 20, deren beiden Enden an die Pole 51 bzw. 52 einer elekrischen Stromquelle angeschlossen sind.

Üblicherweise sind die Abrollfächen der Nocken auch noch speziell, z.B. induktionstechisch, gehärtet. Eine typische Ansprungshärte ist z.B. 60 - 70 HR_{c}. Die beschriebene, elektrische Erwärmung kann mit weiterem Vorteil so ausgeführt werden, dass es dabei zu einer Vergütung der Nocken (z.B. auf eine Härte von 57 - 59 HR_{c}.) kommt. Ein allfällig erforderliches Glühen der Nocken in einem separaten, vorgängigen Arbeitsschritt entfällt dadurch. Um diesen Effekt zu erzielen sollten Temperaturen im Bereich zwischen 200 - 300 °C erreicht werden.

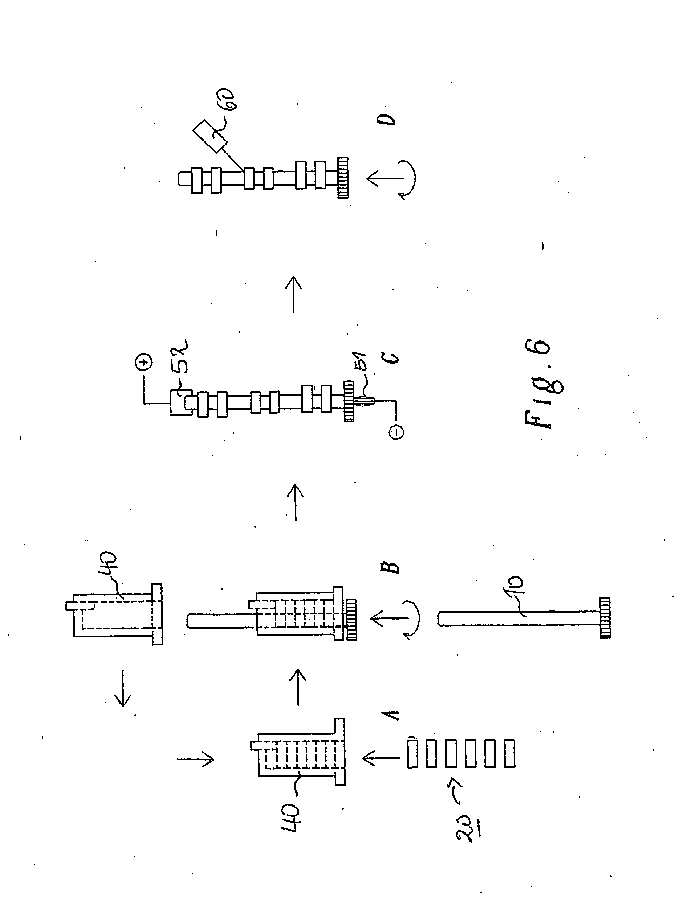

Fig. 6 zeigt schliesslich noch schematisch den Ablauf eines Fügeverfahrens, bei welchem die vorbeschriebenen Techniken optimal und rationell zum Einsatz kommen. Das Vorfixieren.der Nocken 20 auf der Welle 10, das Verschweissen der Nocken mit der Welle sowie auch das Erwärmen der mit den vorfixierten Nocken versehenen Welle vor dem Schweissen erfolgt hierbei jeweils in getrennten Bearbeitungsstationen. Die genannten Vorgänge können deshalb mit Vorteil an verschiedenen Nockenwellen gleichzeitig ablaufen.

In der Station A von Fig. 6 werden leere Magazine 40 zunächst mit einzelnen Nocken 20 (sowie ggf. Lagerringen 30) befüllt. In Station B werden jeweils Wellen 10 in die Magazine 40 das eingeführt. Dort erfolgt dann auch das Vorfixieren der Nocken 20 auf den Wellen 10. Von Station B werden einerseits die leeren Magazine 40 zu Station A zurücktransportiert und andererseits die mit den Nocken 20 vorkonfektionierten Wellen 10 in Station C überführt, in welcher sie elektrisch vorgewärmt werden. Von dort kommen sie in noch heissem Zustand nach Station D, in welcher die Nocken 20 z.B. nacheinander mit einem Laser 60 mit der Welle 10 unter Drehen derselben jeweils definitiv-verschweisst werden.

In Station D könnten natürlich auch gleichzeitig mehrere Laser eingesetzt werden. Zwischen den einzelnen Bearbeitungsstationen könnten auch noch Pufferzonen eingerichtet sein, in welchen jeweils mehrere Wellen zeitweise auf ihre weitere Bearbeitung warten, bzw. Messungen für die Qualitätskontrolle ausgeführt werden. Schliesslich kann es vorgesehen sein, die Wellen auch noch in Station D mit Strom beaufschlagen zu können, um allfällige Temperaturverluste zwischen den einzelnen Schweissvorgängen auszugleichen. Eine Verbindung der Stationen C und D zu einer einheitlichen Station wäre ebenfalls möglich.

## Patentansprüche

1. Verfahren zum Fügen einer Nockenwelle unter Verwendung einer Welle (10) und von mehreren, jeweils eine Durchgangsöffnung für die Welle aufweisenden Nocken (20 -26), **dadurch gekennzeichnet, dass** die Nocken in einem Magazin (40) dicht gepackt, bezüglich ihrer Durchgangsöffnung für die Welle koaxial sowie in einer bestimmten Drehstellung relativ zueinander ausgerichtet werden, dass die Welle in das Nockenpaket eingeführt und darin durch Verschieben in ihrer Längsrichtung nacheinander relativ zu einzelnen Nocken ausgerichtet wird, und dass die Nocken dabei nacheinander auf der Welle fixiert werden.

2. Verfahren nach Anspruch 1, **dadurch gekennzeichnet, dass** die Welle neben ihrer Längsverschiebung ggf. auch noch um einen bestimmten Winkelbetrag gedreht wird.

3. Verfahren nach Anspruch 1 oder 2, **dadurch gekennzeichnet, dass** die Nocken im Magazin relativ zueinander in derselben Drehstellung enthalten sind.

4. Verfahren nach einem der Ansprüche 1 - 3, **dadurch gekennzeichnet, dass** das Fixieren der Nocken auf der Welle lediglich ein Vorfixieren ist und dass die Nocken später noch definitiv mit der Welle verbunden werden.

5. Verfahren nach Anspruch 4, **dadurch gekenzeichnet, dass** das Vorfixieren durch eine Eigenvorspannung der Teile, durch Verkrimpen, klebetechnisch oder schweisstechnisch, insbesondere durch Punktschweissen, erfolgt.

6. Verfahren nach einem der Ansprüche 4 oder 5, **dadurch gekennzeichnet, dass** die Nocken nach dem Vorfixieren schweisstechnisch, insbesondere laser- oder elektronenstrahltechnisch mit der Welle verbunden werden.

7. Verfahren nach Anspruch 6, **dadurch gekennzeichnet, dass** Welle und Nocken vor dem Verschweissen der Nocken mit der Welle vorgewärmt werden.

8. Verfahren nach Anspruch 7, **dadurch gekennzeichnet, dass** die Erwärmung durch elektrische Verlustleistung erfolgt und dass dazu ein elektrischer Strom über die Welle geleitet wird.

9. Verfahren nach einem der Ansprüche 7 oder 8, **dadurch gekennzeichnet, dass** als Nocken solche aus einem wenigstens bereichsweise bis zu einer ersten Härte gehärteten Stahl verwendet werden und dass die Erwärmung so ausgeführt wird, dass die Nocken zu einer geringeren als der ersten Härte vergütet werden.

10. Verfahren nach einem der Ansprüche 7 - 9, **dadurch gekennzeichnet, dass** das Vorfixieren der Nocken auf der Welle einerseits und das Verschweissen der Nocken mit der Welle andererseits sowie ggf. auch das Erwärmen der mit den vorfixierten Nocken versehenen Welle vor dem Schweissen jeweils in getrennten Bearbeitungsstationen erfolgt und zwar derart, dass diese Vorgänge an verschiedenen Nockenwellen gleichzeitig ablaufen können.

## Claims

1. A method of assembling a camshaft using a shaft (10) and a plurality of cams (20-26) each having an opening for the shaft, **characterized in that** the cams, tightly packed in a magazine (40), are oriented with their openings for the shaft coaxially and in a defined rotative position in relation to one another, that the shaft is introduced into the cam stack where it is successively oriented in relation to individual cams by displacement in its longitudinal direction, and that the cams are successively secured on the shaft.

2. The method as claimed in claim 1, **characterized in that** in addition to its longitudinal displacement the shaft is, where necessary, also rotated through a defined angle.

3. The method as claimed in claim 1 or 2, **characterized in that** the cams contained in the magazine are in the same rotative position in relation to one another.

4. The method as claimed in any one of claims 1 to 3, **characterized in that** the cams are only pre-secured on the shaft and that the cams are later also finally joined to the shaft.

5. The method as claimed in claim 4, **characterized in that** the cams are pre-secured through an inherent prestressing of the parts, by crimping, by adhesive bonding or by welding, in particular by spot-welding.

6. The method as claimed in either of claims 4 or 5, **characterized in that** the cams, after pre-securing, are joined to the shaft by welding; in particular by laser or electron-beam welding.

7. The method as claimed in claim 6, **characterized in that** the shaft and the cams are preheated before welding the cams to the shaft.

8. The method as claimed in claim 7, **characterized in that** the heating is produced by electric power loss and that an electrical current is fed through the shaft for this purpose.

9. The method as claimed in either of claims, 7 or 8, **characterized in that** the cams used are made, at least in some areas, of a steel hardened to a first hardness and that the heating is performed so that the cams are tempered to a hardness lower than the first hardness.

10. The method as claimed in any one of claims 7 to 9, **characterized in that** pre-securing of the cams on the shaft, and welding of the cams to the shaft and any heating of the shaft provided with the pre-secured cams prior to welding is in each case performed in separate machining stations, in such a way that these operations can be undertaken on different camshafts simultaneously.

## Revendications

1. Procédé d'assemblage d'un arbre à cames en recourant à un arbre (10) et à plusieurs cames (20-26) qui présentent toutes une ouverture de passage pour l'arbre, **caractérisé en ce que** les cames sont emballées de manière étanche dans un magasin (40), leurs ouvertures de passage pour l'arbre étant alignées coaxialement ainsi que dans une position d'orientation définie les unes par rapport aux autres, **en ce que** l'arbre est inséré dans le paquet de cames et est orienté successivement par rapport aux différentes cames en étant avancé dans le sens de sa longueur, et **en ce que** les cames sont ensuite fixées successivement ' sur l'arbre.

2. Procédé selon la revendication 1, **caractérisé en ce qu'**en plus de son coulissement longitudinal, l'arbre est également tourné d'un angle défini.

3. Procédé selon les revendications 1 ou 2, **caractérisé en ce que** les cames sont reprises dans le magasin dans la même position de rotation mutuelle.

4. Procédé selon l'une des revendications 1 à 3, **caractérisé en ce que** la fixation des cames sur l'arbre est uniquement une préfixation et **en ce que** les cames sont ultérieurement reliées définitivement à l'arbre.

5. Procédé selon la revendication 4, **caractérisé en ce** la préfixation s'effectue sous une précontrainte propre des pièces, par sertissage, collage ou soudage et en particulier par soudage par points.

6. Procédé selon l'une des revendications 4 ou 5, **caractérisé en ce qu'**après la préfixation, les cames sont reliées à l'arbre par une technique de soudage et en particulier par une technique de soudage au laser ou à électrons.

7. Procédé selon la revendication 6, **caractérisé en ce que** l'arbre et les cames sont préchauffés avant le soudage des cames sur l'arbre.

8. Procédé selon la revendication 7, **caractérisé en ce que** le chauffage s'effectue par pertes électriques et **en ce que** l'on fait passer un courant électrique dans l'arbre.

9. Procédé selon l'une des revendications 7 ou 8, **caractérisé en ce que** comme cames, on utilise des cames en un acier dont au moins certaines parties sont durcies jusqu'à une première dureté et **en ce que** le chauffage est réalisé de telle sorte que les cames subissent un revenu jusqu'à une dureté inférieure à la première dureté.

10. Procédé selon l'une des revendications 7 à 9, **caractérisé en ce que** la préfixation des cames sur 1'arbre, d'une part, le soudage de cames sur l'arbre, d'autre part, ainsi qu'éventuellement le chauffage de l'arbre doté des cames préfixées s'effectuent avant le soudage et dans des postes de traitement séparés, de telle sorte que ces opérations puissent être réalisées simultanément sur différentes arbres à cames.
